**Europäisches Patentamt**

**European Patent Office**

**Office européen des brevets**

(19)

(11) Veröffentlichungsnummer: **0 202 192**
**B1**

(12)

# EUROPÄISCHE PATENTSCHRIFT

(45) Veröffentlichungstag der Patentschrift:
**15.03.89**

(21) Anmeldenummer: **86730073.3**

(22) Anmeldetag: **02.05.86**

(51) Int. Cl.⁴: **H02B 11/04,** H01H 31/32

(54) Gekapselte, druckgasisolierte Hochspannungsanlage.

(30) Priorität: **08.05.85 DE 3516925**

(43) Veröffentlichungstag der Anmeldung:
**20.11.86 Patentblatt 86/47**

(45) Bekanntmachung des Hinweises auf die Patenterteilung:
**15.03.89 Patentblatt 89/11**

(84) Benannte Vertragsstaaten:
**CH DE FR LI SE**

(56) Entgegenhaltungen:
**DE-A- 3 318 344**
**DE-B- 1 137 102**
**DE-B- 2 064 037**
**FR-A- 2 105 721**
**US-A- 2 013 507**
**US-A- 2 840 674**
**US-A- 4 256 940**

(73) Patentinhaber: **Siemens Aktiengesellschaft Berlin und München, Wittelsbacherplatz 2, D-8000 München 2(DE)**

(72) Erfinder: **Fischer, Dietrich, Altenburger Allee 3, D-1000 Berlin 19(DE)**
Erfinder: **Kühn, Harald, Dipl.-Ing., Bottroper Weg 14, D-1000 Berlin 27(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine gekapselte, druckgasisolierte Hochspannungsanlage mit elektrischen Leitern, insbesondere Sammelschienen, die eine Unterbrechungsstelle mit zwei einander zugewandten Enden aufweisen, die miteinander durch axiale Verschiebung eines Leiterteils in oder außer Eingriff bringbar sind, wobei dieser verschiebbare Leiterteil in einer mittigen Aussparung des einen Leiterendes gehalten ist, in der er in einer ersten Endlage ganz eingeführt ist, und bei der das andere Leiterende in einen hohlzylindrischen Kuppelkontakt mit federnd gelagerten Stromlamellen eingreift, deren Innendurchmesser dem Außendurchmesser der vorderen Kontaktfläche des verschiebbaren Leiterteils entspricht, der in seiner zweiten Endlage mit seiner vorderen Kontaktfläche an den Stromlamellen anliegt.

Eine derartige Hochspannungsanlage ist aus der DE-OS 3 318 344 bekannt. Bei diesen Hochspannungsanlagen besteht manchmal der Bedarf, insbesondere zu Montage- oder Demontagezwecken, im Verlauf eines stromführenden Leiters eine Unterbrechungsstelle zu bilden, die wieder aufhebbar d.h. überbrückbar sein muß. Dabei darf durch diese Unterbrechungsstelle die Spannungsfestigkeit der Hochspannungsanlage nicht beeinträchtigt werden. Bei der bekannten Hochspannungsanlage befinden sich die Unterbrechungsstellen in der Stromzuführung zu den Unterbrechereinheiten jedes Pols eines Leistungsschalters und ermöglichen die mechanische Trennung der Stromzuführung vom Leistungsschalterpol, damit dieser zu Wartungs- und Reparaturzwecken ausgebaut werden kann. Da eine derartige Wartung verhältnismäßig häufig notwendig werden kann, ist bei der bekannten Hochspannungsanlage der verschiebbare Leiterteil der Unterbrechungsstelle über eine mit einem Außengewinde versehene koaxiale Welle verschiebbar, wobei diese Welle mit Hilfe eines Kegelradgetriebes und eines von außen her eingeführten Werkzeuges gedreht werden kann. Dies ergibt einen verhältnismäßig aufwendigen Aufbau der bekannten Unterbrechungsstelle.

Der Erfindung liegt die Aufgabe zugrunde, eine derartige Unterbrechungsstelle für den Einsatz im Verlauf von Sammelschienen zu schaffen, die bei Anlagenerweiterungen vor der Inbetriebnahme die Prüfung der Spannungsfestigkeit der neuen Anlagenteile ermöglicht, ohne daß die alten Anlagenteile abgeschaltet werden müssen.

Zur Lösung dieser Aufgabe ist eine gekapselte, druckgasisolierte Hochspannungsanlage der eingangs beschriebenen Art gemäß der Erfindung so ausgebildet, daß bei einer Hochspannungsanlage mit Mehrfachsammelschienen in jeder Sammelschiene eine Unterbrechungsstelle angeordnet ist, bei der beide Leiterenden jeweils von einer abgerundeten Abschirmung umgeben sind, deren Stirnflächen in der ersten Endlage des verschiebbaren Leiterteils eine Trennstrecke begrenzen, deren Spannungsfestigkeit der vorgegebenen Spannungsfestigkeit der Spannungsebene der Hochspannungsanlage entspricht, daß das andere Leiterende im Innern des Kuppelkontaktes vor seiner Kontaktfläche zu den Stromlamellen zu einem Hohlzylinder ausläuft, in dem, benachbart zur Stirnseite, eine isolierende Hülse eingesetzt ist, deren Innendurchmesser dem Außendurchmesser eines stirnseitigen Ansatzes an dem verschiebbaren Leiterteil entspricht,

daß in der zweiten Endlage des verschiebbaren Leiterteils die Stirnseite der isolierenden Hülse an dem Absatz zwischen der vorderen Kontaktfläche zu den Stromlamellen und dem stirnseitigen Ansatz anliegt und

daß der verschiebbare Leiterteil auf seiner Stirnseite und auf seiner Mantelfläche mit Angriffsflächen für die Verschiebung versehen ist.

Jede Unterbrechungsstelle ist konstruktiv und spannungsmäßig wie die Trennstrecke eines Trennschalters ausgebildet. In der ersten Endlage des verschiebbaren Leiterteils, also bei offener Trennstrecke, befindet sich das verschiebbare Leiterteil ganz innerhalb der Abschirmung. Da bei der Hochspannungsanlage mit Mehrfachsammelschienen in jeder Sammelschiene eine derartige Unterbrechungsstelle zwischen alten und neuen Anlageteilen vorgesehen ist, können bei dieser ersten Endlage aller verschiebbaren Leiterteile die alten Anlageteile über eine Sammelschiene weiter betrieben werden, wenn an den neuen Anlageteilen über eine andere Sammelschiene eine Spannungsprüfung durchgeführt wird. Die Prüfspannung wird dafür jeweils an eine Sammelschiene im neuen Anlageteil gelegt, die einer geerdeten Sammelschiene des alten Anlageteils gegenübersteht. Dadurch kann an dieser Unterbrechungsstelle die Abschirmung, die Prüfspannung führt, nur einer geerdeten Abschirmung gegenüberstehen, ebenso wie an einer anderen Unterbrechungsstelle die Abschirmung, die Betriebsspannung führt, einer geerdeten Abschirmung gegenübersteht. Für die dabei maximal mögliche Spannungsdifferenz ist aber die Trennstrecke jeder Unterbrechungsstelle hinsichtlich ihrer Spannungsfestigkeit ausgelegt, da ihre Spannungsfestigkeit der vorgegebenen Spannungsfestigkeit der Hochspannungsanlage entspricht.

In der zweiten Endlage des verschiebbaren Leiterteils ist die Trennstrecke überbrückt. Dabei ist eine einwandfreie zentrische Führung und eine genau definierte Endlage des verschiebbaren Leiterteils durch den Hohlzylinder mit eingesetzter isolierender Hülse gegeben, die für isolierte Anschläge und Führungsflächen sorgt. Der Stromübergang von dem verschiebbaren Leiterteil erfolgt dadurch auch nur im dafür vorgesehenen Bereich der Anlage an den Stromlamellen. Die Verschiebbarkeit des die Trennstrecke überbrückenden Leiterteils wird ermöglicht, in dem auf der Mantelfläche, d.h. von der Trennstrecke her zugänglich, bzw. auf der Stirnfläche, d.h. in der ersten Endlage zugänglich, Angriffsflächen für ein Werkzeug zur Verschiebung vorgesehen sind.

Es ist besonders vorteilhaft, wenn das eine Leiterende ebenfalls in einem zweiten hohlzylindrischen Kuppelkontakt mit federnd gelagerten Stromlamellen endet, der sich im Innern der Abschirmung befindet und der stirnseitig mit einem isolierenden Lagerring verschlossen ist, wobei der Innendurchmesser des Lagerringes dem Außendurchmesser der an diesen Stromlamellen in der zweiten Endlage zur Anlage gelangenden hinteren Kontaktfläche des verschiebbaren Leiterteils entspricht. Auch hier ist dann ein eindeutig definierter, durch den isolierenden Lagerring begrenzter Stromübergang von dem anderen Leiterende her über die Stromlamellen auf die hintere Kontaktfläche des verschiebbaren Leiterteils, der sich in seiner zweiten Endlage befindet gegeben. Da der Innendurchmesser des Lagerringes dem Außendurchmesser der hinteren Kontaktfläche entspricht, dient dieser gleichzeitig zur zentrischen Führung des verschiebbaren Leiterteils.

Ferner empfiehlt es sich, während des Verschiebens des Leiterteiles auf diesen, sobald er sich in der Trennstrecke befindet, einen abgerundeten Klemmring aufzuschieben und so zu befestigen, daß er einen geringen Abstand zur Stirnseite der Abschirmung des anderen Leiterendes aufweist und somit nur eine geringe Bewegung des verschiebbaren Leiterteils in axialer Richtung zuläßt, so daß ein ungewolltes Verlassen der zweiten Endlage durch unverhofft auftretende stoßartige Belastungen vermieden ist. Wenn der abgerundete Klemmring aus leitendem Material besteht, ist es zweckmäßig, zwischen dem Klemmring und der Stirnfläche der Abschirmung eine Isolierscheibe anzuordnen, so daß ein unerwünschter Stromübergang auf die Abschirmung vermieden wird.

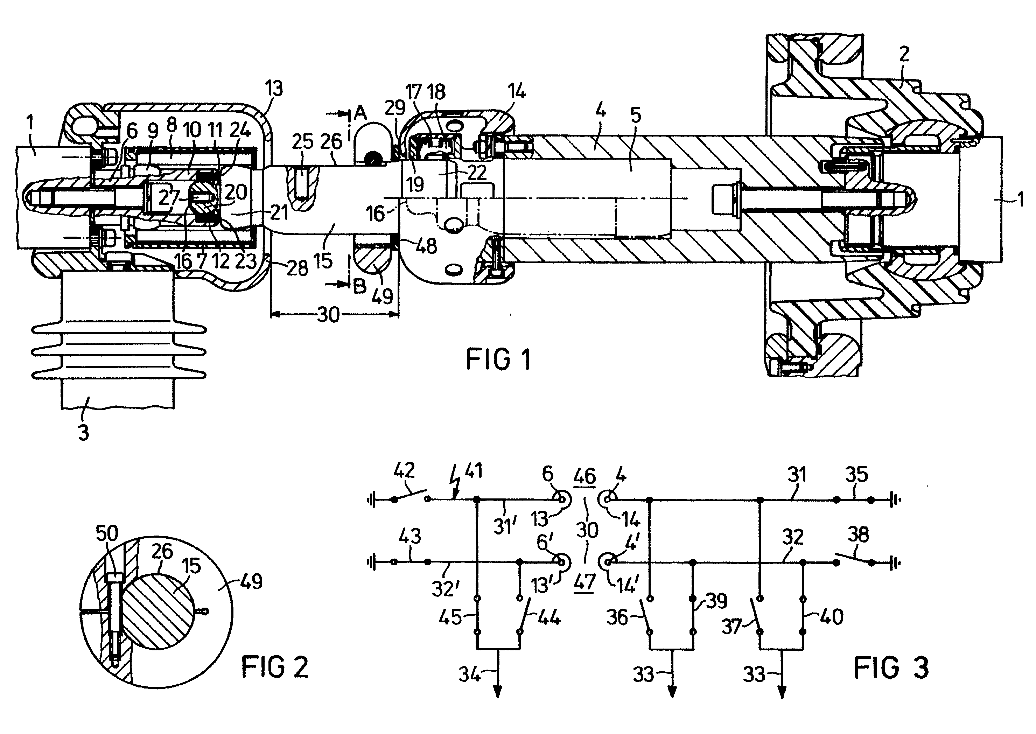

Im folgenden sei die Erfindung noch anhand des in den Figuren 1 bis 3 der Zeichnung dargestellten Ausführungsbeispiels näher erläutert. Figur 1 zeigt einen Längsschnitt durch einen Sammelschienenleiter einer gekapselten, druckgasisolierten Hochspannungsanlage, wobei die erste Endlage des verschiebbaren Leiterteils in der unteren Hälfte gestrichelt angedeutet ist. Figur 2 zeigt, gedreht dargestellt, einen Schnitt entlang der Linie A/B in Figur 1. In Figur 3 ist das Prinzipschaltbild der Hochspannungsanlage bei einer Spannungsprüfung gezeigt.

Eine gekapselte, druckgasisolierte Hochspannungsanlage mit Doppelsammelschiene enthält zur Stromführung zwischen Schaltfeldern Sammelschienenabschnitte. In diesen durchsetzt der Leiter 1 entweder lichtbogenfest ausgeführte Durchführungsisolatoren 2 oder stützt sich auf Stützisolatoren 3 gegenüber der nicht dargestellten, metallischen, geerdeten, rohrförmigen Kapselung ab und wird somit in Abstand zu dieser gehalten.

Wenn bei jeder der beiden Sammelschienen der Doppelsammelschiene nun z.B. der Durchführungsisolator 2 zu einem alten Anlageteil gehört, der mittels neuer Schaltfelder erweitert werden soll, so werden im Leiterbereich zum nächsten Stützisolator 3 zwei einander zugewandte Leiterenden vorgesehen, zwischen denen eine Unterbrechungsstelle gebildet ist, die überbrückt werden kann. Das eine Leiterende 4 ist massiv ausgebildet, über den Leiter 1 an dem Durchführungsisolator 2 befestigt und weist eine lange mittige Aussparung 5 auf.

Das andere Leiterende 6 liegt am Stützisolator 3 und ist dort am Leiter 1 befestigt. Das andere Leiterende 6 greift in einen hohlzylindrischen Kuppelkontakt 7 mit federnd gelagerten Stromlamellen 8 ein, gegen die es mit seiner Kontaktfläche 9 anliegt. Im Innern des Kuppelkontakts 7 läuft das andere Leiterende 6 zu einem Hohlzylinder 10 aus, in dem, benachbart zur Stirnseite 11 und über diese hinausstehend eine isolierende Hülse 12 eingesetzt ist. Dieses gesamte andere Leiterende 6 ist von einer abgerundeten Abschirmung 13 umgeben, welche das Leiterende 6 völlig umschließt.

Auch am Leiterende 4 ist eine abgerundete Abschirmung 14 vorgesehen, welche sämtliche mit dem Leiterende 4 verbundenen Teile umgibt, sowie auch den verschiebbaren Leiterteil 15, wenn sich dieser in seiner ersten Endlage befindet. In dieser ersten Endlage ist der verschiebbare Leiterteil 15 ganz in die mittige Aussparung 5 des Leiterendes 4 eingeführt (siehe die gestrichelt angedeutete Lage in der unteren Hälfte der Figur 1) und seine Stirnfläche 16 befindet sich noch im Innern der Abschirmung 14.

Auch dieses Leiterende 4 endet in einem zweiten hohlzylindrischen Kuppelkontakt 17 mit federnd gelagerten Stromlamellen 18, der sich im Innern der Abschirmung 14 befindet. Dieser Kuppelkontakt 17 ist stirnseitig mit einem isolierenden Lagerring 19 verschlossen.

Der verschiebbare Leiterteil 15 ist an seiner Stirnseite 16 mit einem Ansatz 20 versehen. Der Außendurchmesser dieses stirnseitigen Ansatzes 20 entspricht dem Innendurchmesser der isolierenden Hülse 12, die im Hohlzylinder 10 des anderen Leiterteils 6 angeordnet ist. Dadurch wird eine zentrische Führung des verschiebbaren Leiterteils 15 in der isolierenden Hülse 12 erreicht, ohne daß dort ein Stromübergang auftreten kann. Hinter dem stirnseitigen Ansatz 20 liegt die vordere Kontaktfläche 21 des verschiebbaren Leiterteils 15, deren Außendurchmesser dem Innendurchmesser der federnd gelagerten Stromlamellen 8 des Kuppelkontaktes 7 entspricht, an denen diese vordere Kontaktfläche 21 in der zweiten Endlage des verschiebbaren Leiterteils 15 zur Anlage gelangt.

Der verschiebbare Leiterteil 15 weist außerdem noch die hintere Kontaktfläche 22 auf, deren Außendurchmesser dem Innendurchmesser der Stromlamellen 18 des zweiten Kuppelkontaktes 17 und dem Innendurchmesser des Isolierringes 19 entspricht. In der zweiten Endlage des verschiebbaren Leiterteils 15 liegt diese hintere Kontaktfläche 22 an den Stromlamellen 18 und am isolierenden Lagerring 19 an. Dadurch ist der Stromübergang zwischen dem massiven Leiterende 4 und den Stromlamellen 18 auf den verschiebbaren Leiterteil 15 auf einen genau definierten Bereich beschränkt. Außerdem dient der Lagerring 19 zur zentrischen Führung des verschiebbaren Leiterteils 15.

In dieser zweiten Endlage des verschiebbaren Leiterteils 15 ist der stirnseitige Ansatz 20 ebenfalls durch die isolierende Hülse 12 zentrisch geführt. Außerdem gelangt die Stirnseite 23 dieser isolierenden Hülse 12 an dem Absatz 24 zwischen der vorderen Kontaktfläche 21 zu den Stromlamellen 8 und dem stirnseitigen Ansatz 20 zum Anschlag, so daß auch in axialer Richtung die zweite Endlage des verschiebbaren Leiterteils 15 eindeutig festgelegt ist.

Der verschiebbare Leiterteil 15 ist außerdem mit einer Bohrung 25 auf seiner Mantelfläche 26 und mit einer mittigen Bohrung 27 mit Gewinde auf seiner Stirnfläche 16 versehen. Diese bilden Angriffsflächen zur Aufnahme eines Werkzeugs, mit dem der verschiebbare Leiterteil 15 bewegt werden kann. In der ersten Endlage des verschiebbaren Leiterteils 15 ist die Bohrung 27 an der Stirnfläche 16 zugänglich. Die Bohrung 25 auf der Mantelfläche 26 ist so angeordnet, daß sie zugänglich wird, bevor die Stirnfläche 16 in die Abschirmung 13 eintritt.

Die Stirnfläche 28 der Abschirmung 13 und die Stirnfläche 29 der Abschirmung 14 begrenzen in der ersten Endlage des verschiebbaren Leiterteils 15 die durch Pfeile angedeutete Trennstrecke 30, deren Spannungsfestigkeit der vorgegebenen Spannungsfestigkeit der Spannungsebene der Hochspannungsanlage entspricht. Bei der Hochspannungsanlage ist eine Doppelsammelschiene mit den beiden Sammelschienen 31 und 32 vorhanden, bei der zwischen alten Anlageteilen 33 und dem neuen Anlageteil 34 (siehe Figur 3) in jeder Sammelschiene 31, 32 eine Unterbrechungsstelle vorgesehen ist, deren Trennstrecke 30 in der ersten Endlage des verschiebbaren Leiterteils 15 offen ist. Um an dem neuen Anlageteil 34 eine Spannungsprüfung durchzuführen, ist nun im Bereich der alten Anlageteile 33 die Sammelschiene 31 über den Erder 35 geerdet. Die im Abzweig dieser Sammelschiene 31 liegenden, zu den Anlageteilen 33 führenden Trennschalter 36, 37 sind geöffnet. Bei der anderen Sammelschiene 32 ist dagegen der Erder 38 geöffnet, und die zu den Anlageteilen 33 führenden Trennschalter 39, 40 sind geschlossen. Die alten Anlageteile 33 können somit über die Sammelschienen 32 betrieben werden.

Die Prüfspannung für die Spannungsprüfung, angedeutet durch das Symbol 41, wird nun im neuen Anlageteil 34 der Sammelschiene 31' zugeführt, deren Erder 42 geöffnet ist. Die andere Sammelschiene 32' im neuen Anlageteil 34 ist über den geschlossenen Erder 43 geerdet. Der von der Sammelschiene 32' zu dem neuen Anlageteil 34 führende Trennschalter 44 ist geöffnet, während der zu der Sammelschiene 31' führende Trennschalter 45 geschlossen ist. Die Spannungsprüfung des neuen Anlageteils 34 kann somit von der Sammelschiene 31' aus durchgeführt werden. Dabei stehen sich an der oberen Unterbrechungsstelle 46 zwischen der Sammelschiene 31 und der Sammelschiene 31' an der offenen Trennstrecke 30, die das Leiterende 6 umgebende Abschirmung 13, die Prüfspannung führt, und die das Leiterende 4 umgebende Abschirmung 14, die geerdet ist, gegenüber. Im Zuge der Sammelschiene 32, 32' liegt dagegen die untere Unterbrechungsstelle 47. Bei dieser steht die das Leiterende 4' umgebende Abschirmung 14', die Betriebsspannung der alten Anlageteile 33 führt, der das Leiterende 6' umgebenden Abschirmung 13' gegenüber, die geerdet ist. Da die Trennstrecke 30 beider Unterbrechungsstellen 46, 47 hinsichtlich ihrer Spannungsfestigkeit der vorgegebenen Spannungsfestigkeit der Hochspannungsanlage entspricht, werden während der Spannungsprüfung des neuen Anlageteils 34 die im Betrieb befindlichen alten Anlageteile 33 nicht gefährdet, auch wenn infolge eines Bau- oder Montagefehlers ein Überschlag an der Unterbrechungsstelle 46, an der Prüfspannung ansteht, auftreten würde.

Nach Beendigung einer derartigen Prüfung auf Spannungsfestigkeit des neuen Anlageteils 34 wird dann das verschiebbare Leiterteil 15 durch Einführen eines Werkzeugs in die stirnseitige Bohrung 27, die mit einem Gewinde versehen ist, aus seiner ersten Endlage herausgeholt und in die Trennstrecke 30 eingeführt. Es wird nun eine Isolierscheibe 48 und ein abgerundeter Klemmring 49 auf den verschiebbaren Leiterteil 15 aufgeschoben, derart, daß die Isolierscheibe 48 in der zweiten Endlage des verschiebbaren Leiterteils 15 außen an der Stirnfläche 29 der Abschirmung 14 anliegt und der Klemmring 49 sich in einem geringen Abstand davor befindet. Dadurch wird eine axiale Beweglichkeit des verschiebbaren Leiterteils 15 in seiner zweiten Endlage verhindert, so daß sichergestellt ist, daß auch bei Längsverschiebungen infolge von Wärmedehnungen oder stoßartigen Belastungen die Kontaktflächen 22 bzw. 21 jeweils an den Stromlamellen 18 bzw. 8 anliegen, so daß der Stromübergang in den dafür vorgesehenen Bereichen sichergestellt ist. Der abgerundete Klemmring 49 wird durch eine Schraube 50 auf der Mantelfläche 26 des verschiebbaren Leiterteils 15 festgelegt.

In Abwandlung des dargestellten Ausführungsbeispiels ist es möglich, das andere Leiterende nicht unmittelbar am Stützisolator zu befestigen, sondern davor im Zuge der Sammelschiene anzuordnen. In diesem Fall ist außer der bereits am Stützisolator vorhandenen Abschirmung noch eine zusätzliche Abschirmung allein um das Leiterende herum vorzusehen.

**Patentansprüche**

1. Gekapselte, druckgasisolierte Hochspannungsanlage mit elektrischen Leitern (1), insbesondere Sammelschienen (31, 32), die eine Unterbrechungsstelle (46, 47) mit zwei einander zugewandten Enden aufweisen, die miteinander durch axiale Verschiebung eines Leiterteils (15) in oder außer Eingriff bringbar sind, wobei dieser verschiebbare Leiterteil (15) in einer mittigen Aussparung (5) des einen Leiterendes (4) gehalten ist, in der er in einer ersten Endlage ganz eingeführt ist, und bei der das andere Leiterende (6) in einen hohlzylindrischen Kuppelkontakt (7) mit federnd gelagerten Stromlamellen (8) eingreift, deren Innendurchmesser dem Außendurchmesser der vorderen Kontaktfläche (21) des verschiebbaren Leiterteils (15) entspricht, der in seiner zweiten Endlage mit seiner vorderen Kontaktfläche (21) an den Stromlamellen (8) anliegt, dadurch gekennzeichnet, daß bei einer Hochspannungsanlage mit Mehrfachsammelschienen in jeder Sammelschiene (31, 32) eine Unterbrechungsstelle (46, 47) angeordnet ist, bei der beide Leiterenden (4, 6, 4', 6') jeweils von einer abgerundeten Abschirmung (13, 14, 13', 14') umgeben sind, deren Stirnflächen (28, 29) in der ersten Endlage des verschiebbaren Leiterteils (15) eine Trennstrecke (30) begrenzen, deren Spannungsfestigkeit der vorgegebenen Spannungsfestgkeit der Spannungsebene der Hochspannungsanlage entspricht, daß das andere Leiterende (6) im Innern des Kuppelkontaktes (7) vor seiner Kontaktfläche (9) zu den Stromlamellen (8) zu einem Hohlzylinder (10) ausläuft, in dem, benachbart zur Stirnseite (11), eine isolierende Hülse (12) eingesetzt ist, deren Innendurchmesser dem Außendurchmesser eines stirnseitigen Ansatzes (20) an dem verschiebbaren Leiterteil (15) entspricht,

daß in der zweiten Endlage des verschiebbaren Leiterteils (15) die Stirnseite (23) der isolierenden Hülse (12) an dem Absatz (24) zwischen der vorderen Kontaktfläche (21) zu den Stromlamellen (8) und dem stirnseitigen Ansatz (20) anliegt und

daß der verschiebbare Leiterteil (15) auf seiner Stirnseite (16) und auf seiner Mantelfläche (26) mit Angriffsflächen (25, 27) für die Verschiebung versehen ist.

2. Gekapselte, druckgasisolierte Hochspannungsanlage nach Anspruch 1, dadurch gekennzeichnet, daß das eine Leiterende (4) ebenfalls in einem zweiten hohlzylindrischen Kuppelkontakt (17) mit federnd gelagerten Stromlamellen (18) endet, der sich im Innern der Abschirmung (14) befindet und der stirnseitig mit einem isolierenden Lagerring (19) verschlossen ist, wobei der Innendurchmesser des Lagerringes (19) dem Außendurchmesser der an diesen Stromlamellen (18) in der zweiten Endlage zur Anlage gelangenden hinteren Kontaktfläche (22) des verschiebbaren Leiterteils (15) entspricht.

3. Gekapselte, druckgasisolierte Hochspannungsanlage nach Anspruch 1 oder Anspruch 2, dadurch gekennzeichnet, daß die Angriffsflächen am verschiebbaren Leiterteil aus Bohrungen (25, 27) bestehen, die zur Aufnahme eines Werkzeugs dienen.

4. Gekapselte, druckgasisolierte Hochspannungsanlage nach Anspruch 1, dadurch gekennzeichnet, daß auf dem sich in seiner zweiten Endlage befindlichen verschiebbaren Leiterteil (15) ein abgerundeter Klemmring (49) befestigt ist, der einen geringen Abstand zur Stirnseite (29) der das eine Leiterende (4) umgebenden Abschirmung (14) aufweist.

5. Gekapselte, druckgasisolierte Hochspannungsanlage nach Anspruch 4, dadurch gekennzeichnet, daß zwischen dem Klemmring (49) und der Stirnfläche (29) der Abschirmung (14) des Leiterendes (4) eine Isolierscheibe (48) angeordnet ist.

## Claims

1. An enclosed, pressure-gas insulated high voltage plant having electrical conductors (1), more particularly bus bars (31, 32), which comprise an interruption point (46, 47) having two ends which face one another and which can be brought into and out of contact by the axial displacement of a conductor part (15), said displaceable conductor part (15) being held in a central recess (5) in one conductor end (4), in which it is fully introduced in a first end position and in which the other conductor end (6) engages in a hollow cylindrical coupling contact (7) having resiliently mounted current plates (8), the internal diameter of which corresponds to the outer diameter of the front contact surface (21) of the displaceable conductor part (15), which in its second end position rests with its front contact surface (21) against the current plates (8), characterised in that in the case of a high voltage plant having multiple bus bars, an interruption point (46, 47) is provided in each bus bar (31, 32), at which interruption point the two conductor ends (4, 6, 4', 6') are enclosed in each case by a rounded shield (13, 14, 13', 14'), the end faces (28, 29) of which in the first end position of the displaceable conductor part (15) define a dividing space (30), the dielectric strength of which corresponds to the predetermined dielectric strength of the voltage level of the high voltage plant, in that the second conductor end (6) extends inside the coupling contact (7) in front of its contact surface (9) with the current plates (8) into a hollow cylinder (10), in which an insulating sleeve (12) is inserted adjacent the end face (11), the internal diameter of the insulating sleeve (12) corresponding to the outer diameter of an end face projection (20) on the displaceable conductor part (15), in that in the second end position of the displaceable conductor part (15) the end face (23) of the insulating sleeve (12) rests against the stepped portion (24) between the front contact surface (21) with the current plates (8) and the end face projection (20), and in that the displaceable conductor part (15) is provided on its end face (16) and on its cylindrical surface (26) with working surfaces (25, 27) for the displacement.

2. An enclosed, pressure-gas insulated high voltage plant according to claim 1, characterised in that the first conductor end (4) also ends in a second hollow cylindrical coupling contact (17) having resiliently mounted current plates (18), which coupling contact is disposed inside the shield (14) and is closed on its end face by means of an insulating bearing ring (19), the internal diameter of the bearing ring (19) corresponding to the outer diameter of the rear contact surface (22) of the displaceable conductor part (15) which comes to rest against said current plates (18) in the second end position.

3. An enclosed, pressure-gas insulated high voltage plant according to claim 1 or claim 2, characterised in that the working surfaces on the displaceable conductor part are formed by bores (25, 27), which are used to receive a tool.

4. An enclosed, pressure-gas insulated high voltage plant according to claim 1, characterised in that a rounded clamping ring (49) is secured to the displaceable conductor part (15) when the latter is in its second end position, which clamping ring (49) is at a slight distance from the end face (29) of the shield (14) enclosing the first conductor end (4).

5. An enclosed, pressure-gas insulated high voltage plant according to claim 4, characterised in that an insulating disc (48) is arranged between the clamping ring (49) and the end face (29) of the shield (14) of the conductor end (4).

## Revendications

1. Installation de distribution électrique haute tension du type blindé et à isolation par un gaz sous pression, avec des conducteurs électriques (1), en particulier des barres omnibus (31, 32), qui présentent des points d'interruption (46, 47) avec deux extrémités qui se font face et qui, par coulissement axial d'un élément conducteur (15), sont susceptibles d'être amenées en prise ou hors de prise, ledit élément conducteur coulissant (15) étant maintenu dans un évidement médian (5) ménagé dans l'une (4) des extrémités de conducteur dans lequel il est introduit complètement dans une première position d'extrémité, et dans laquelle l'autre extrémité (6) de conducteur pénètre dans un contact cylindrique creux en forme de coupelle, avec des lamelles conductrices (8) montées élastiquement et dont le diamètre intérieur correspond au diamètre extérieur de la surface de contact antérieure (21) de l'élément conducteur coulissant (15), qui, dans sa seconde position, porte, avec sa surface de contact antérieure (21), contre les lamelles conductrices (8), caractérisée par le fait
que dans une installation haute tension à plusieurs barres omnibus, il est prévu, dans chaque barre omnibus (31, 32), un point d'interruption (46, 47) au niveau duquel chacune des deux extrémités (4, 6, 4', 6') des conducteurs est entourée par un écran de blindage arrondi (13, 14, 13', 14') dont les surfaces frontales (28, 29) délimitent, dans la première position d'extrémité de l'élément conducteur coulissant (15), un intervalle de coupure (30) dont la rigidité électrique correspond à la rigidité diélectrique, donnée à l'avance, du plan de tension de l'installation haute tension,
que l'autre extrémité de conducteur (6) se termine, à l'intérieur du contact en forme de coupelle (7) et à l'aide de sa surface de contact avec les lamelles conductrices (8), par un cylindre creux (10) dans lequel est insérée, dans le voisinage du côté frontal (11), une douille isolante (12) dont le diamètre intérieur correspond au diamètre extérieur d'un appendice frontal (20) ménagé sur l'élément conducteur coulissant (15),
que dans la seconde position d'extrémité de l'élément coulissant (15), le côté frontal (23) de la douille isolante (12) porte contre l'appendice (24) situé entre la surface de contact antérieure (21) associée aux lamelles conductrices (8) et l'appendice frontal (20), et
que l'élément conducteur coulissant (15) est pourvu sur son côté frontal (16) et sur sa surface latérale (26) de surfaces d'attaque (25, 27) pour son coulissement.

2. Installation de distribution électrique haute tension du type blindé et à isolation par un gaz sous pression, caractérisée par le fait que l'extrémité de conducteur (4) se termine également dans un second contact cylindrique creux en forme de coupelle, avec des lamelles conductrices (18) montées élastiquement, lequel second contact se situe à l'intérieur d'un écran de blindage (14) et est fermé du côté frontal par un anneau de montage (19), alors que le diamètre intérieur de l'anneau de montage (19) correspond au diamètre extérieur de la surface de contact postérieure (22) de l'élément conducteur coulissant (15), qui vient porter contre ces lamelles conductrices (18), dans la seconde position d'extrémité.

3. Installation de distribution électrique haute tension, du type blindé et à isolation par un gaz sous pression selon la revendication 1 ou 2, caractérisée par le fait que les surfaces d'attaque prévues sur l'élément conducteur coulissant sont constituées par des perçages (25, 27) qui servent à recevoir un outil.

4. Installation de distribution électrique haute tension, du type blindé et à isolation par un gaz sous pression selon la revendication 1, caractérisée par le fait que sur l'élément conducteur coulissant (15) qui se trouve dans sa seconde position d'extrémité, est fixé un anneau de serrage (49) qui présente une faible distance par rapport au côté frontal (29) de l'écran de blindage (14) qui entoure l'extrémité de conducteur (4).

5. Installation de distribution électrique haute tension, du type blindé et à isolation par un gaz sous pression selon la revendication 4, caractérisée par le fait qu'entre l'anneau de serrage (49) et la surface frontale (25) de l'écran de blindage (14) de l'extrémité de conducteur (4) est disposé un disque isolant (48).

FIG 1

FIG 2

FIG 3

EP 0 202 192 B1